(19) Europäisches Patentamt
European Patent Office
Office européen des brevets

(11) **EP 2 530 256 A2**

(12) **EUROPEAN PATENT APPLICATION**

(43) Date of publication:
**05.12.2012 Bulletin 2012/49**

(51) Int Cl.:
***F01K 23/06*** *(2006.01)*

(21) Application number: **12168607.5**

(22) Date of filing: **21.05.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **30.05.2011 JP 2011120587**

(71) Applicant: **KABUSHIKI KAISHA TOYOTA JIDOSHOKKI**
**Kariya-shi,**
**Aichi-ken 448-8671 (JP)**

(72) Inventors:
• **Mori, Hidefumi**
**Kariya-shi, Aichi 448-8671 (JP)**
• **Iguchi, Masao**
**Kariya-shi, Aichi 448-8671 (JP)**
• **Enokijima, Fuminobu**
**Kariya-shi, Aichi 448-8671 (JP)**

(74) Representative: **TBK**
**Bavariaring 4-6**
**80336 München (DE)**

(54) **Waste heat recovery mechanism and waste heat recovery apparatus**

(57)     A waste heat recovery mechanism and a waste heat recovery apparatus generate electricity even when an expander, which is coupled to a combustion engine outputting rotational drive force, is locked. The waste heat recovery mechanism includes an alternator having a rotary shaft, which is coupled to and driven to rotate by a combustion engine, and an expander having an output shaft, which is coupled to the rotary shaft of the alternator. The output shaft applies a rotational drive force to the rotary shaft, thereby assisting rotation of the rotary shaft. A torque limiter is located between the rotary shaft of the alternator and the output shaft of the expander.

Fig.2

## Description

### BACKGROUND OF THE INVENTION

The present invention relates to a waste heat recovery mechanism and a waste heat recovery apparatus that include an alternator coupled to a combustion engine and an expander, which applies rotational drive force to the alternator.

Such a waste heat recovery mechanism (fluid machine) is disclosed, for example, in Japanese Laid-Open Patent Publication No. 2004-340139 (refer to Fig. 10 of the publication). The waste heat recovery mechanism disclosed in the publication includes a pulley, which is coupled to an engine via a belt, an expander in a Rankine cycle, and an alternator. The pulley, the expander, and the alternator have a common rotary shaft. In this configuration, the rotational drive force of the engine is delivered to the alternator via the pulley and the common rotary shaft. Also, the expander converts thermal energy into rotational drive force, which is intern delivered to the alternator. Accordingly, the alternator generates electricity.

However, since the pulley, the expander and the alternator are coupled to the common rotary shaft in the above described waste heat recovery mechanism, the alternator cannot be operated by the rotational drive force of the engine when the expander is locked. In this case, the alternator cannot generate electricity.

### SUMMARY OF THE INVENTION

Accordingly, it is an objective of the present invention to provide a waste heat recovery mechanism and a waste heat recovery apparatus capable of generating electricity even when an expander, which is coupled to a combustion engine outputting rotational drive force, is locked.

To achieve the foregoing objective and in accordance with one aspect of the present invention, a waste heat recovery mechanism that includes an alternator and an expander is provided. The alternator has a rotary shaft, which is coupled to and driven to rotate by a combustion engine. The expander has an output shaft, which is coupled to the rotary shaft of the alternator. The output shaft applies a rotational drive force to the rotary shaft, thereby assisting rotation of the rotary shaft. A torque limiter is located between the rotary shaft of the alternator and the output shaft of the expander.

Other aspects and advantages of the invention will become apparent from the following description, taken in conjunction with the accompanying drawings, illustrating by way of example the principles of the invention.

### BRIEF DESCRIPTION OF THE DRAWINGS

The invention, together with objects and advantages thereof, may best be understood by reference to the following description of the presently preferred embodiments together with the accompanying drawings in which:

Fig. 1 is a cross-sectional view showing a waste heat recovery mechanism according to a first embodiment of the present invention;
Fig. 2 is a schematic diagram showing a heat recovery apparatus according to the first embodiment;
Fig. 3 is a cross-sectional view showing a waste heat recovery mechanism according to a second embodiment of the present invention;
Fig. 4 is a schematic diagram showing a heat recovery apparatus according to the second embodiment; and
Fig. 5 is a cross-sectional view showing a waste heat recovery mechanism according to a third embodiment of the present invention.

### DETAILED DESCRIPTION OF THE PREFERRED EMBODIMENTS

<First Embodiment>

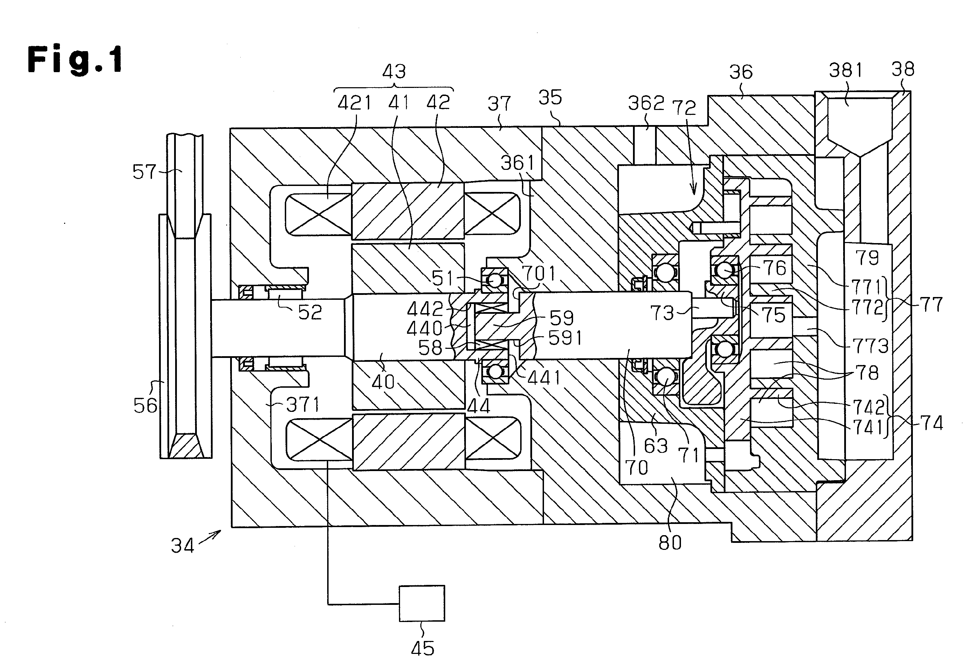

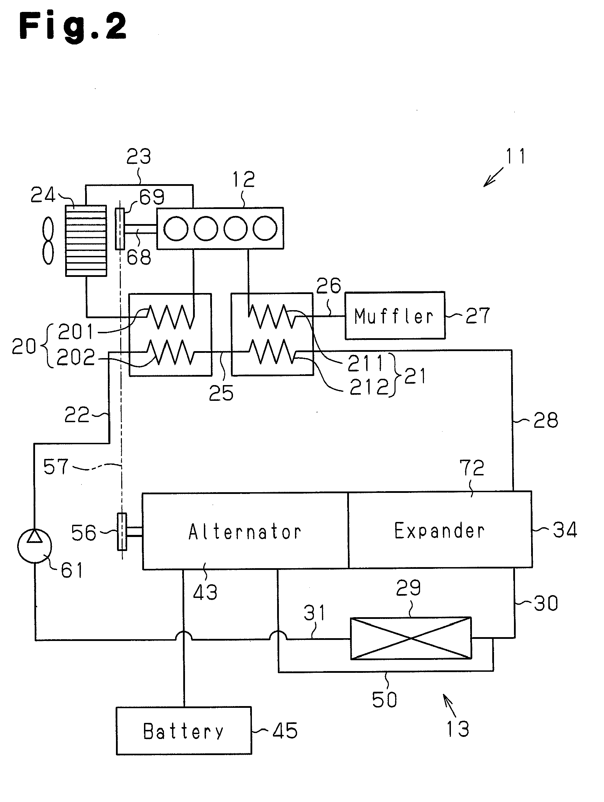

A first embodiment of the present invention will now be described with reference to Figs. 1 and 2.

As shown in Fig. 2, a waste heat recovery apparatus 11 includes an engine 12 (combustion engine) mounted on a vehicle and a Rankine cycle circuit 13, which includes a waste heat recovery mechanism 34. In the Rankine cycle circuit 13, refrigerant is heated by the engine 12, which is a waste heat source, and circulated. As shown in Fig. 1, a housing 35 of the waste heat recovery mechanism 34 includes a center housing member 36, a front housing member 37 secured to the front end (the left end as viewed in Fig. 1) of the center housing member 36, and a rear housing member 38 secured to the rear end (the right end as viewed in Fig. 1) of the center housing member 36.

A partition 361 is formed in the front end (the left end as viewed in Fig. 1) of the center housing member 36, and a front end wall 371 is formed at the front end (the left end as viewed in Fig. 1) of the front housing member 37. The partition 361 and the front end wall 371 rotationally support a rotary shaft 40 via bearings 51, 52. A rotor 41 is fixed to the rotary shaft 40 at a position that corresponds to a center of the front housing member 37. A stator 42 having a coil 421 is fixed to a center of the inner circumferential surface of the front housing member 37 to encompass the rotor 41. The rotary shaft 40, the stator 42, and the rotor 41 form an alternator 43 (generator). The rotary shaft 40 is the rotor shaft of the alternator 43, and a cylindrical portion 44 is formed at the rear end (the right end as viewed in Fig. 1) of the rotary shaft 40.

In the alternator 43, electricity is generated in the coil 421 of the stator 42 when the rotor 41 rotates. A battery 45 is electrically connected to the alternator 43. The electricity generated by the alternator 43 is stored in the battery 45.

The rotary shaft 40 extends through the front end wall 371 of the front housing member 37 and protrudes outward from the front housing member 37. A pulley 56 is fixed to the protruding portion of the rotary shaft 40. On the other hand, a pulley 69 (see Fig. 2) is fixed to a crankshaft 68 (see Fig. 2), which is an output shaft of the engine 12. A belt 57 is routed around the pulley 56 and the pulley 69.

A support block 63 is fixed in the center housing member 36. The support block 63 rotationally supports an output shaft 70 via a bearing 71. The output shaft 70 extends through the partition 361, and an end face 701 at the front end (the left end as viewed in Fig. 1) of the output shaft 70 faces an end face 441 of the cylindrical portion 44 of the rotary shaft 40.

A small diameter end 59 projects from the end face 701 of the output shaft 70, and the small diameter end 59 is received in an in-cylinder space 440 of the cylindrical portion 44. A torque limiter 58 is located between an inner circumferential surface 442 of the cylindrical portion 44 and an outer circumferential surface 591 of the small diameter end 59. The output shaft 70 is coaxially coupled to the rotary shaft 40 via the torque limiter 58. The torque limiter 58 allows the rotary shaft 40 to rotate relative to the output shaft 70 when the output shaft 70 cannot rotate.

A scroll type expander 72 is located between the support block 63 and the rear housing member 38.

The structure of the expander 72 will now be described.

An eccentric shaft 73 is provided on the rear end of the output shaft 70. The eccentric shaft 73 orbits about the rotational axis of the output shaft 70 as the output shaft 70 rotates. The eccentric shaft 73 rotationally supports an orbiting scroll 74 via a bushing 75 and a bearing 76. The orbiting scroll 74 includes an orbiting end plate 741 supported by the bearing 76 and an orbiting volute wall 742 projecting from the orbiting end plate 741.

A fixed scroll 77 is fixed in the interior of the rear end of the center housing member 36 to face the orbiting scroll 74. The fixed scroll 77 has a fixed end plate 771 and a fixed volute wall 772, and the fixed volute wall 772 protrudes from the fixed end plate 771 toward the support block 63. The orbiting volute wall 742 of the orbiting scroll 74 and the fixed volute wall 772 of the fixed scroll 77 mesh with each other to define an expansion chamber 78, the volume of which is variable.

A supply chamber 79 is defined between the fixed end plate 771 and the rear housing member 38. A supply port 773, which communicates with the supply chamber 79, is formed in a center of the fixed end plate 771. An introduction port 381 is formed in the rear housing member 38. A discharge chamber 80 is formed between the center housing member 36 and the support block 63. Refrigerant in the expansion chamber 78 is discharged to the discharge chamber 80. A discharge port 362, which communicates with the discharge chamber 80, is formed in a circumferential wall of the center housing member 36.

The Rankine cycle circuit 13 in the waste heat recovery apparatus 11 will now be described.

As shown in Fig. 2, the Rankine cycle circuit 13 includes the expander 72 that constitutes the waste heat recovery mechanism 34, a condenser 29, a pump 61, a first boiler 20, and a second boiler 21.

The first boiler 20 includes a heat sink 202 and a heat radiator 201. The heat radiator 201 is arranged on a coolant circulation path 23 connected to the engine 12. An engine radiator 24 is provided in the coolant circulation path 23. After cooling the vehicle engine 12, coolant circulates through the coolant circulation path 23 and radiates heat at the heat radiator 201 and the engine radiator 24.

The second boiler 21 includes a heat sink 212 and a heat radiator 211. The heat sink 212 of the second boiler 21 is connected to the delivery side of the heat sink 202 of the first boiler 20 via a connection passage 25. The heat radiator 211 is arranged in an exhaust passage 26 connected to the engine 12. Exhaust from the engine 12 radiates heat at the heat radiator 211 before being discharged through a muffler 27. Refrigerant that is delivered from the pump 61 in a pressurized state passes through the heat sink 202 of the first boiler 20 to be heated by the coolant of the engine 12 that flows through the heat radiator 201. Thereafter, the refrigerant flows through the heat sink 212 of the second boiler 21 to be further heated by the exhaust of the engine 12 that flows through the heat radiator 211. That is, the refrigerant delivered from the pump 61 in a pressurized state is heated by waste heat of the engine 12 through heat exchange taking place at the first boiler 20 and the second boiler 21.

The introduction port 381 of the expander 72 is connected to the delivery port of the heat sink 212 of the second boiler 21 via a supply passage 28. High-temperature and high-pressure refrigerant that has been heated at the first boiler 20 and the second boiler 21 is introduced into the expander 72 via the supply passage 28. The condenser 29 is connected to the discharge port 362 close to the expander 72 via a discharge passage 30. Low-pressure refrigerant that has been expanded at the expander 72 is discharged to the condenser 29 via the discharge passage 30. The pump 61 is connected to the downstream side of the condenser 29 via a second passage 31. The first boiler 20 is connected the downstream side of the pump 61 via a first passage 22.

The second passage 31, the first passage 22, the connection passage 25, the supply passage 28, and the discharge passage 30 constitute a refrigerant circulation passage of the Rankine cycle circuit 13. The pump 61 causes refrigerant to circulate the first passage 22, the first boiler 20, the second boiler 21, the expander 72, the condenser 29, and the second passage 31 in that order.

Operation of the first embodiment will now be described.

After being sent to the first passage 22 by the pump 61, refrigerant is delivered to the supply passage 28 via the heat sink 202 of the first boiler 20, the connection passage 25, and the heat sink 212 of the second boiler 21. The refrigerant that passes through the heat sink 202 of the first boiler 20 and the heat sink 212 of the second boiler 21 is heated by waste heat from the engine 12.

The high-pressure refrigerant that has been heated at the boilers 20, 21 is introduced into the expansion chamber 78 via the introduction port 381 and the supply chamber 79 of the expander 72 and is then expanded. Through the expansion of the refrigerant, the expander 72 outputs mechanical energy (rotational force), which in turn assists rotation of the output shaft 70 and the rotary shaft 40. The refrigerant, the pressure of which is lowered through expansion, is discharged to the discharge passage 30. The refrigerant discharged to the discharge passage 30 is returned to the pump 61 through the condenser 29.

When the expander 72 is locked, that is, when the output shaft 70 cannot be rotated, the torque limiter 58, which is located between the output shaft 70 and the rotary shaft 40 of the alternator 43, allows the rotary shaft 40 to rotate. Therefore, the alternator 43 is operated by rotational drive force from the engine 12 and generates electricity.

The first embodiment provides the advantage that, if the expander 72 is locked, the torque limiter 58 allows the rotary shaft 40 to be rotated. Thus, even if the expander 72 is locked, the alternator 43 is reliably operated to generate electricity.

<Second Embodiment>

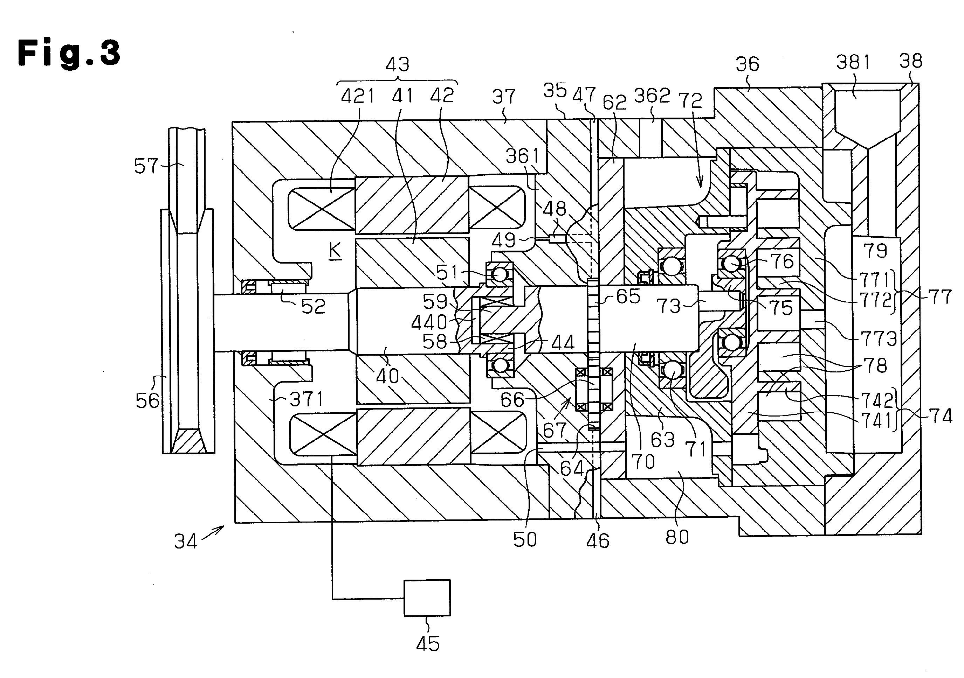

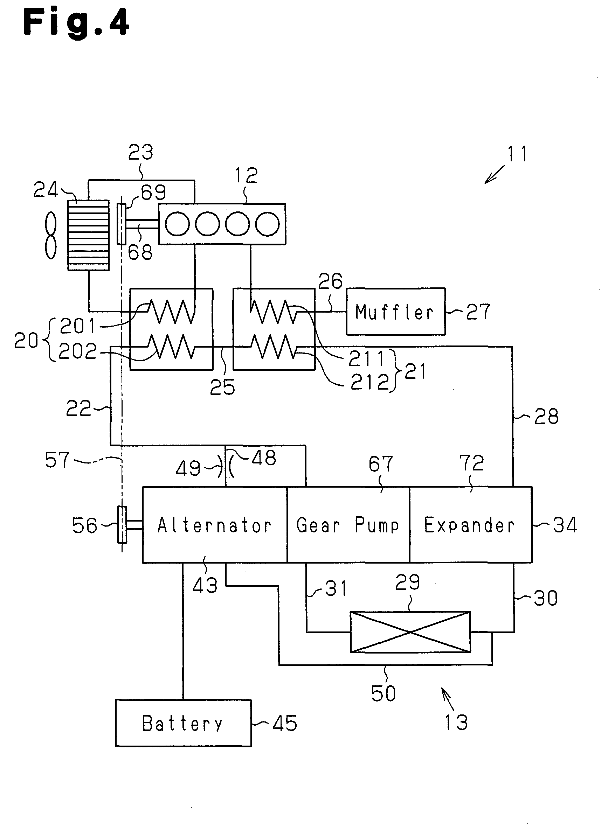

A second embodiment will now be described with reference to Figs. 3 to 4. The same reference numerals are given to those components that are the same as the corresponding components of the first embodiment, and detailed explanations are omitted.

As shown in Fig. 3, a side plate 62 is fixed in the center housing member 36 to face the partition 361. A pump chamber 64 is formed between the partition 361 and the side plate 62, and a gear pump 67 is located in the pump chamber 64. The output shaft 70 extends through the partition 361 and the side plate 62.

The gear pump 67 includes a drive gear 65, which is fixed to the output shaft 70, and a driven gear 66, which meshes with the drive gear 65. A suction passage 46 is connected to the suction side (the lower side as viewed in Fig. 3) of the pump chamber 64, and a delivery passage 47 is connected to the delivery side (the upper side as viewed in Fig. 3) of the pump chamber 64. The suction passage 46 constitutes a part of the second passage 31, and the delivery passage 47 constitutes a part of the first passage 22. The pump chamber 64, the delivery passage 47, and the suction passage 46 are formed by making recesses in the end face of the partition 361.

A branching passage 48 is connected to the delivery passage 47, and a restriction 49 is formed at the end of the branching passage 48. The restriction 49 opens to an inner space K of the front housing member 37. The inner space K is a zone for accommodating the alternator 43 in the housing 35.

An outflow passage 50 is formed to extend through the partition 361 of the center housing member 36 and the side plate 62. The inner space K communicates with the discharge chamber 80 through the outflow passage 50.

Some of the refrigerant discharged from the pump chamber 64 of the gear pump 67 returns to the gear pump 67 after passing through the first passage 22, the first boiler 20, the second boiler 21, the expander 72, and the condenser 29. The remainder of the refrigerant discharged from the pump chamber 64 flows into the inner space K via the branching passage 48 and the restriction 49. Refrigerant that has passed through the condenser 29 is cooled to be liquefied and discharged from the gear pump 67. Since the temperature of refrigerant that is discharged from the gear pump 67 is low, the refrigerant cools the alternator 43 when flowing into the inner space K. Cooling of the alternator 43 contributes to improvement of electricity generation efficiency.

The refrigerant that has cooled the alternator 43 flows into the discharge chamber 80 via the outflow passage 50. The refrigerant discharged to the discharge chamber 80 is returned to the gear pump 67 through the discharge passage 30 and the condenser 29.

In the present embodiment also, when the gear pump 67 is locked, that is, when the output shaft 70 cannot be rotated, the torque limiter 58 allows the rotary shaft 40 to be rotated. Therefore, even if the gear pump 67 is locked, the alternator 43 is operated by rotational drive force from the engine 12 and generates electricity in a reliable manner.

<Third Embodiment>

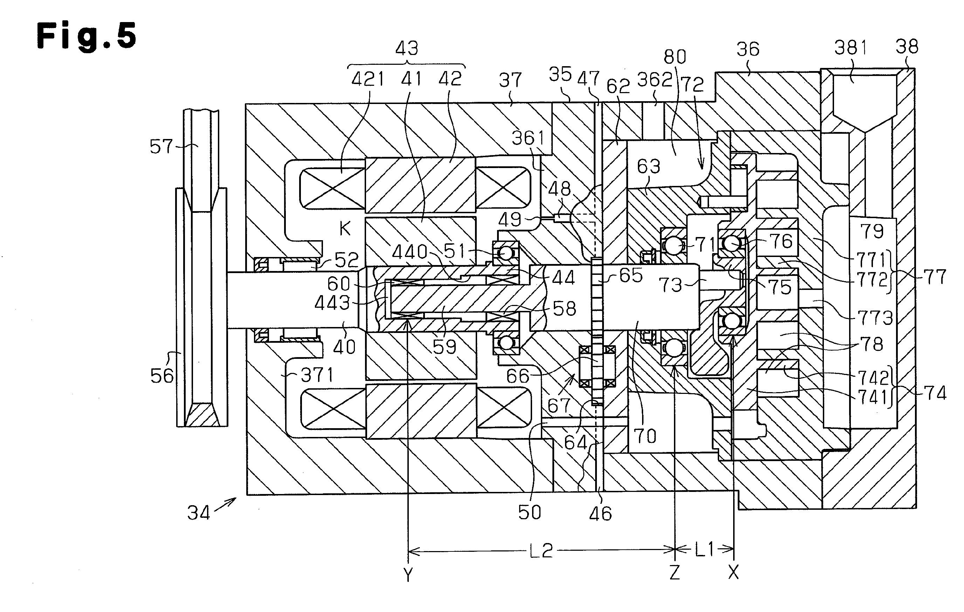

A third embodiment will now be described with reference to Fig. 5. The same reference numerals are given to those components that are the same as the corresponding components of the second embodiment, and detailed explanations are omitted.

An insertion space 443 is recessed in the bottom of the in-cylinder space 440 of the cylindrical portion 44. The insertion space 443 receives the small diameter end 59 of the output shaft 70. A plane bearing 60, which is an auxiliary bearing, is located between the outer circumferential surface of the distal end of the small diameter end 59 and the inner circumferential surface of the insertion space 443. The plane bearing 60 is closer to the distal end of the output shaft 70 than the torque limiter 58.

The gas pressure in the radial direction of the gaseous refrigerant in the expander 72 is transmitted to the output shaft 70 via the bearing 76. The position X of the bearing 76 is a point to which the force of the gas pressure in the radial direction is applied. Assuming that the position Y of the plane bearing 60 serves as a fulcrum, the position Z of the bearing 71, which is the main bearing of the output shaft 70, serves as the point of action.

When the distance between the position X and the position Z in the axial direction of the output shaft 70, the distance between the position Z and the position Y in the axial direction of the output shaft 70, the load acting on the bearing 76 at the position X, and the force acting on the bearing 71 at the position Z are expressed by L1, L2, Fx, and Fz, respectively, the following expression (1) is satisfied.

$$Fz \times L2 = Fx \times (L1 + L2) \dots (1)$$

The expression (1) can be rewritten as follows.

$$Fz = Fx \times (L1 + L2)/L2$$
$$= Fx \times (L1/L2 + 1) \dots (2)$$

In the expression (2), assuming that the load Fx and the distance L1 are constant, the force Fz is reduced as the distance L2 is increased. In other words, the more separated the plane bearing 60 from the bearing 76, the smaller the force Fz acting on the bearing 71 becomes. Reduction in the force Fz, which acts on the bearing 71, contributes to at least one of extension of the life and reduction in size of the bearing 71. Therefore, the configuration in which the plane bearing 60 is located on the side opposite to the bearing 71 with respect to the torque limiter 58 is preferable.

The present invention may be modified as follows.

The rotary shaft 40 may be a hollow shaft.

A cylindrical portion may be formed in an end of the output shaft 70, and a small diameter end may be formed on an end face of the rotary shaft 40. In this case, the small diameter end is received in the cylindrical portion, and a torque limiter is located between the inner circumferential surface of the cylindrical portion and the outer circumferential surface the small diameter end.

In the third embodiment, the plane bearing may be replaced by a needle bearing.

The present invention may be applied to a waste heat recovery apparatus that is not used in vehicles.

A vane-type expander may be used as the expander.

A waste heat recovery mechanism and a waste heat recovery apparatus generate electricity even when an expander, which is coupled to a combustion engine outputting rotational drive force, is locked. The waste heat recovery mechanism includes an alternator having a rotary shaft, which is coupled to and driven to rotate by a combustion engine, and an expander having an output shaft, which is coupled to the rotary shaft of the alternator. The output shaft applies a rotational drive force to the rotary shaft, thereby assisting rotation of the rotary shaft. A torque limiter is located between the rotary shaft of the alternator and the output shaft of the expander.

## Claims

1. A waste heat recovery mechanism (34) comprising:

   an alternator (43) having a rotary shaft (40), which is coupled to and driven to rotate by a combustion engine (12); and
   an expander (72) having an output shaft (70), which is coupled to the rotary shaft (40) of the alternator (43), wherein the output shaft (70) applies a rotational drive force to the rotary shaft (40), thereby assisting rotation of the rotary shaft (40),
   the waste heat recovery mechanism (34) being **characterized in that**:

   a torque limiter (58) is located between the rotary shaft (40) of the alternator (43) and the output shaft (70) of the expander (72).

2. The waste heat recovery mechanism (34) according to claim 1, **characterized in that**, when the output shaft (70) of the expander (72) cannot be rotated, the torque limiter (58) allows the rotary shaft (40) of the alternator (43) to be rotated relative to the output shaft (70).

3. The waste heat recovery mechanism (34) according to claim 1, **characterized by** further comprising a pump (67) for delivering under pressure refrigerant discharged by the expander (72), wherein the pump (67) is coupled to the output shaft (70) of the expander (72) to be driven and rotated.

4. The waste heat recovery mechanism (34) according to claim 1, **characterized in that**:

   a cylindrical portion (44) is formed at an end of the rotary shaft (40) of the alternator (43),
   an end of the output shaft (70) of the expander (72) is inserted into the cylindrical portion (44), and
   the torque limiter (58) is located between the inner circumferential surface (442) of the cylindrical portion (44) and the outer circumferential surface (591) of the end of the output shaft (70).

5. The waste heat recovery mechanism (34) according to claim 1, **characterized in that**:

a cylindrical portion is formed at an end of the output shaft (70) of the expander (72), an end of the rotary shaft (40) of the alternator (43) is inserted into the cylindrical portion (44), and the torque limiter (58) is located between the inner circumferential surface of the cylindrical portion and the outer circumferential surface of the end of the rotary shaft (40).

6.  The waste heat recovery mechanism (34) according to claim 4 or 5, **characterized in that**:

    the output shaft (70) of the expander (72) is rotationally supported by a main bearing (71) and an auxiliary bearing (60), and the auxiliary bearing (60) is located between the outer circumferential surface of the end of the output shaft (70) or the end of the rotary shaft (40) and the inner circumferential surface of the cylindrical portion and is located on a side opposite to the main bearing (71) with respect to the torque limiter (58).

7.  A waste heat recovery apparatus (11), **characterized by** comprising a combustion engine (12), which is a waste heat source, and a Rankine cycle circuit (13) including the waste heat recovery mechanism (34) according to claim 1.

# Fig.1

EP 2 530 256 A2

# Fig.2

# Fig.3

# Fig.4

**Fig.5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004340139 A